# EUROPEAN PATENT SPECIFICATION

(11) **EP 4 060 932 B1**
(45) Date of publication and mention of the grant of the patent: **12.04.2023**
(21) Application number: 22162319.2
(22) Date of filing: 15.03.2022
(51) Int. Cl.: H04L 9/08, H04L 9/00

(54) **ENCODING VARIABLES USING A PHYSICAL UNCLONABLE FUNCTION MODULE**
KODIERUNG VON VARIABLEN UNTER VERWENDUNG EINES PHYSIKALISCHEN UNKLONBAREN FUNKTIONSMODULS
CODAGE VARIABLES À L'AIDE D'UN MODULE DE FONCTION PHYSIQUE INCLONABLE

(30) Priority: 15.03.2021 GB 202103562
(43) Date of publication of application: 21.09.2022
(73) Proprietor: Nordic Semiconductor ASA, 7052 Trondheim (NO)
(72) Inventor: POLO, David Garcia, 7052 Trondheim (NO)
(74) Representative: Dehns

(56) References cited:
- STANCIU ALEXANDRA ET AL: "Generating an unique identifier for FPGA devices", 2014 INTERNATIONAL CONFERENCE ON OPTIMIZATION OF ELECTRICAL AND ELECTRONIC EQUIPMENT (OPTIM), IEEE, 22 May 2014 (2014-05-22), pages 802-808, XP032615863, DOI: 10.1109/OPTIM.2014.6850952

## Description

### Technical Field

The present invention relates to an integrated circuit that utilises a physical unclonable function to generate constants for encoding variables as data (e.g. sensitive data) which may provide improved resilience to side channel attacks.

### Background

Many integrated circuits (ICs) handle sensitive data that is encoded by the IC. In order to encode a particular variable, the IC utilises certain constants to represent the different states that the data might have. In the simplest case, a variable having two states may be encoded as either a '0' or a '1'.

It has been appreciated, however, that ICs may be vulnerable to so-called `side channel attacks'. Of particular interest is a `fault injection' side channel attack, in which an attacker utilises electromagnetic radiation to manipulate channels within the IC to try and change the state of one or more bits so as to change the behaviour of the device in some way. A device that uses the encoding scheme above in which data is encoded using the simple {0, 1} pair of constants may be particular vulnerable to this type of attack, as only a single bit needs to be flipped to change the state of the variable.

A technique for improving resilience against such attacks, known in the art *per se,* is to increase the `Hamming distance' between the constants used to represent the different encoding states for the data, where the Hamming distance is defined as the total number of bits that differ between the two encoding states. In the above example in which the encoding values are {0, 1}, the Hamming distance is 1. However, using hexadecimal notation in a simple two-level encoding scheme, data may be encoded either as e.g. 0xA5 (i.e. 0b10100101) and 0x5A (i.e. 0b01011010), which has a Hamming distance of 8. A side-channel attack using electromagnetic fault injection would typically flip a single bit, or set all of the bits to '0' or '1' (incidentally, this is why 'trivial' values of '0', '1', 0x00, and 0xFF are strongly discouraged).

Thus, it is generally known in the art to select encoding constants that maximise the Hamming distance, so as to increase the difficulty for an attacker to successfully change data from one valid encoding value (representing a valid initial state of the variable) to another valid encoding value (i.e. representing another valid state of the variable).

The Applicant has appreciated, however, that even setting the constants to non-trivial values may not provide adequate protection. If an attacker is given sufficient time with a particular IC, or many of that same IC, that attacker may be able to determine what the constants are. If those same constants are used for all similar ICs, then the attacker may eventually be able to perform successful fault injection side channel attacks on other identical ICs using the knowledge gleaned about the constants earlier. STANCIU ALEXANDRA ET AL: "Generating an unique identifier for FPGA devices", 2014 INTERNATIONAL CONFERENCE ON OPTIMIZATION OF ELECTRICAL AND ELECTRONIC EQUIPMENT (OPTIM), IEEE, 22 May 2014 (2014-05-22), pages 802-808, XP032615863 describes fingerprint generation using an FPGA.

### Summary of the Invention

When viewed from a first aspect, the present invention provides a method of encoding a variable having one of a plurality of states using an integrated circuit comprising a physical unclonable function module able to generate a fingerprint value deterministically dependent on one or more physical fabrication properties of the integrated circuit, the method comprising:
using the physical unclonable function module to generate said fingerprint value;
generating a first encoding value using the fingerprint value;
generating a second encoding value using the fingerprint value; and
encoding said variable such that:
   the variable is encoded using said first encoding value when the variable has a first state; and
   the variable is encoded using said second encoding value when the variable has a second state.

This first aspect of the present invention extends to an integrated circuit arranged to encode a variable having one of a plurality of states, wherein the device comprises:
a physical unclonable function module able to generate a fingerprint value deterministically dependent on one or more physical fabrication properties of the integrated circuit;
a generator arranged to generate first and second encoding values using the fingerprint value; and
an encoder arranged to encode said variable such that:
   the variable is encoded using said first encoding value when the variable has a first state; and
   the variable is encoded using said second encoding value when the variable has a second state.

The first aspect of the invention also extends to a non-transitory computer-readable medium comprising instructions that, when executed by a processor, cause the processor to carry out a method of encoding a variable having one of a plurality of states using an integrated circuit comprising a physical unclonable function module able to generate a fingerprint value deterministically dependent on one or more physical fabrication properties of the integrated circuit, the method comprising:
using the physical unclonable function module to generate said fingerprint value;
generating a first encoding value using the fingerprint value;
generating a second encoding value using the fingerprint value; and
encoding said variable such that:
   the variable is encoded using said first encoding value when the variable has a first state; and
   the variable is encoded using said second encoding value when the variable has a second state.

The first aspect of the invention further extends to a computer software product comprising instructions that, when executed by a processor, cause the processor to carry out a method of encoding a variable having one of a plurality of states using an integrated circuit comprising a physical unclonable function module able to generate a fingerprint value deterministically dependent on one or more physical fabrication properties of the integrated circuit, the method comprising:
using the physical unclonable function module to generate said fingerprint value;
generating a first encoding value using the fingerprint value;
generating a second encoding value using the fingerprint value; and
encoding said variable such that:
   the variable is encoded using said first encoding value when the variable has a first state; and
   the variable is encoded using said second encoding value when the variable has a second state.

Thus it will be appreciated that embodiments of the present invention provide an improved arrangement in which the encoding values (i.e. the non-trivial constants used for encoding the variable based on its state) are generated using the physical unclonable function (PUF). This advantageously means that the encoding values are unique-per-device. It may be seen that embodiments of the present invention substitute an un-encoded value for a variable (e.g. '0' or '1' for a variable having a binary state) for a value determined by the PUF module.

While conventional approaches, known in the art *per se,* increase the difficulty in determining a suitable method for altering one encoding value to another, the present invention further increases the security of the IC device because even if a successful attack on one device is carried out such that the encoding constant for that specific device are found, the results cannot then be used on another device. Advantageously, embodiments of the present invention make each device within the same class behave differently against side channel attacks that aim to extract information from the IC.

Moreover, the Applicant has appreciated that many `brute force' attack techniques result in the destruction of the device that is being attacked to recover the information. Thus if an attacker seeks to extract the encoding values from one device embodying the present invention, that device may be destroyed even if the encoding values are found, and the recovered encoding values are then useless for breaking into another device of the same class (i.e. another device embodying the invention), thereby enhancing the resilience of the class of devices as a whole and making attacks consume more of the attacker's resources. However, even if the device is not destroyed by the attack (e.g. by a non-destructive side channel attack), any encoding values successfully extracted are not useful for other devices, as these values are unique-per-device.

Moreover, the Applicant has appreciated that many side-channel attack techniques are based on finding similarities in the power profile due to identical data been read or written in the IC device. Thus if an attacker seeks to extract information searching for similarities, this is rendered more difficult because the sensitive data being read and written is different in each device.

It will be appreciated that a PUF is an element that is sometimes included in conventional ICs for the purpose of generated cryptographic keys. Specifically, a PUF is a physical object that for a given input with certain conditions, provides a unique response that serves as a unique identifier (i.e. a 'fingerprint' of the device). The output of the PUF, i.e. the `fingerprint value', is generally a string of bits.

"Generating an Unique Identifier for FPGA Devices" by Stanciu and Cr 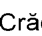 ciun, doi: 10.1109/OPTIM.2014.6850952 discloses a method for generating a unique identifier on an integrated circuit hardware device using its physical properties.

Typically, a PUF is most often based on physical variations that arise during manufacturing, e.g. to temperature variations, impurities in the silicon, the exact process used, etc. A PUF is a physical entity embodied in a physical structure, rather than a software function.

In other words, a PUF is a hardware element within an integrated circuit, which is arranged to generate a fingerprint value deterministically dependent on one or more physical fabrication properties of the integrated circuit.

The Applicant has appreciated an advantageous arrangement in which this same function - typically only used for generated keys for cryptographic functions in conventional devices - can be applied to generating non-trivial constants for use in encoding sensitive data.

As outlined previously, the physical unclonable function generates the fingerprint value based on one or more physical fabrication properties of the device. This dependence is deterministic, in that the output of the PUF is consistent for a given device. Generally, the fingerprint value is determined by the microstructure of the device. The fingerprint value is ideally stable across a wide variety of operating conditions. In other words, as the operating temperature, supply voltage, etc. are varied, the output of the PUF should ideally remain constant (at least across typical operating ranges).

Some PUFs are of a challenge-response type, in which the PUF responds to a particular physical stimulus in a certain way where the response to that stimulus is used as the fingerprint value.

The physical fabrication property or properties on which the fingerprint value deterministically depends may vary depending on the type of PUF in use, where a number of different PUFs to which the principles of the present invention may apply are outlined hereinbelow. The one or more physical fabrication properties may, at least in some embodiments, include one or more of the group comprising: a threshold voltage of a transistor within the integrated circuit; a gain factor of a transistor within the integrated circuit; a delay period of a path within the integrated circuit; a start-up condition or start-up state of a memory (e.g. a static random-access memory); or a race condition.

There are a number of different types of PUF, known in the art *per se,* to which the principles of the present invention are readily applicable. In general, the advantages provided by the present invention may be achieved by any type of PUF that can provide a unique-per-device fingerprint value which can then be used for the generation of the encoding values. For example, the PUF may be an electronic PUF (where the source of uniqueness is measured fully electronically, using some suitable signal); an optical PUF or quantum optical PUF (where the source of uniqueness is measured optically); a radio frequency PUF (where the source of uniqueness is measured using radio frequency methods); or a magnetic PUF (where the source of uniqueness is measured magnetically).

Examples of `fully electronic' PUFs which may be used for the present invention include: a via PUF; a delay PUF; a static random-access memory (SRAM) PUF; a metal resistance PUF; a bistable ring PUF; a dynamic random-access memory (DRAM) PUF; a digital PUF; an oxide rupture PUF; a coating PUF; and/or a quantum electronic PUF.

The above-referenced types of PUF are known in the art *per se,* however these are typically used for cryptographic functions (e.g. for the generation of cryptographic keys) or as a seed for a random or pseudorandom number generator.

In some embodiments, the PUF module may also be used to generate one or more cryptographic keys. In some potentially overlapping embodiments, the PUF module may be used to generate a seed for a pseudorandom number generator.

It will be appreciated that more than two constants may be used for encoding data. As such, in some embodiments, the method further comprises:
generating at least one further encoding value using the fingerprint value;
wherein the variable is encoded using said further encoding value when the variable has a further state.

The encoding values may be generated from the fingerprint value in a number of ways. However, in some embodiments, the first encoding value is set to a first portion of the fingerprint value and the second encoding value is set to a second portion of the fingerprint value different to said first portion. Each further encoding value, where used, may be set to a further different portion of the fingerprint value.

Thus, in accordance with such embodiments, the fingerprint value output from the PUF module may be used directly as the encoding values. For example, the first encoding value may be set to the first 32 bits of the fingerprint value, the second encoding value may be set to the second 32 bits of the fingerprint value, etc. Thus if three encoding values are in use, code running on the device can query the PUF to obtain the first 96 bits of the fingerprint value and determine accordingly what the first, second, and third encoding values are for that device. As outlined above, even if an attacker obtains these values, they cannot be used for another device, as they are unique to that device. It will of course be appreciated that the use of 32 bit encoding values is merely an example, and encoding values may have other bit lengths.

Of course, in some embodiments, other approaches could be used in order to derive the encoding values from the fingerprint value. For example, a different pattern for selecting the bits from the fingerprint value that are assigned to each encoding value could be used. By way of non-limiting example, the first encoding value could be constructed from the odd-numbered bits (e.g. the first, third, fifth, and seventh bits) while the second encoding value could be constructed from the even-numbered bits (e.g. the second, fourth, sixth, and eighth bits). Any other suitable combination or permutation of the bits from the fingerprint value could be used to generate the encoding values, as appropriate.

Further approaches for generating the encoding values from the fingerprint value include subjecting the fingerprint value to one or more processing step(s). For example, the fingerprint value (or portions thereof) could be subject to a hashing function in order to generate the encoding values. Additionally or alternatively, the fingerprint value may be used as a seed for a pseudorandom number generator arranged to produce an output, wherein the output of the pseudorandom number generator is used as the encoding values. Additionally or alternatively, the fingerprint value may be used as a cryptographic key in an encryption process, wherein a plurality of values are encrypted using said key based on the fingerprint value to generate the encoding values. Additionally or alternatively, the fingerprint value may be used as a cryptographic key for a substitution cipher, wherein first and second starting values are input to said substitution cipher to generate said first and second encoding values (where further such starting values may similarly be input to generate further encoding values where appropriate).

### Brief Description of Drawings

Certain embodiments of the invention will now be described, by way of example only, with reference to the accompanying drawings in which:
Fig. 1 is a block diagram of an integrated circuit in accordance with an embodiment of the present invention;
Fig. 2 is a flowchart illustrating operation of the device of Fig. 1; and
Fig. 3 is a state diagram illustrating how different encoding values generated by the PUF module can be used to encode the states of a variable.

### Detailed Description

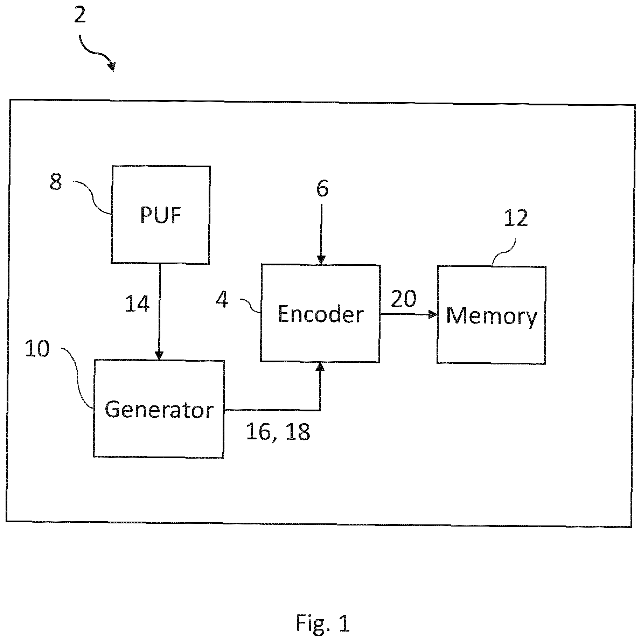

Fig. 1 is a block diagram of an integrated circuit 2 in accordance with an embodiment of the present invention. The device 2 comprises an encoder 4 arranged to encode data 6 received by the encoder 4. The device 2 also includes a PUF module 8, a generator 10, and a memory 12.

The PUF module 8 may be implemented using any suitable PUF, known in the art *per se.* In general, the PUF module 8 outputs a fingerprint value 14 that is dependent on its unique microstructure resulting from its fabrication.

For example, a delay PUF makes use of variations in the propagation delay of signals through a circuit (e.g. the delay of wires and/or gates of the circuit). A via PUF (sometimes called a `contact PUF') makes use of variations in the formation of the vias (or contacts) fabricated during a complimentary metal-oxide-semiconductor (CMOS) fabrication process (e.g. varying their size). An SRAM PUF makes use of the unique start-up conditions of an SRAM that arise due to the specific (and unique) physical properties of the transistors in the IC that vary e.g. the gain factor and/or threshold voltage of each transistor.

Importantly, the fingerprint value 14 output by the PUF is unique to the device 2. It is generally extremely difficult to fabricate an otherwise identical device having a PUF that would output the same value as the PUF module 8 of the device 2 (thus the term 'unclonable').

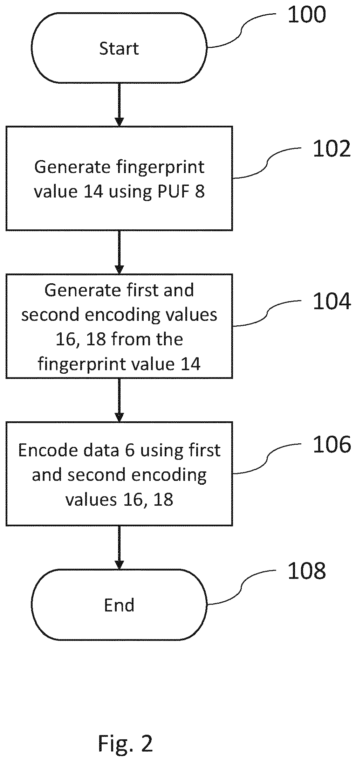

Operation of the device 2 of Fig. 1 is described below with further reference to the flowchart of Fig. 2.

After the process is started at an initial step 100, the fingerprint value 14 is generated by the PUF module 8 at step 102. This 'generation' of the fingerprint value 14 may be carried out in the manner suited to the particular type of PUF module 8 in use, e.g. this may include taking a measurement electronically or optically as appropriate to obtain the fingerprint value 14.

Subsequently, at step 104, the fingerprint value 14 is input to the generator 10 which produces a number of non-trivial constants suitable for use as encoding values. In this particular example, the generator 10 produces two encoding values 16, 18, however it will be appreciated that one or more further values could be generated for use with encoding schemes that use more than two encoding states.

In this example, the generator 10 takes the first sixty-four bits of the output of the PUF module 8 as the fingerprint value and separates these into two thirty-two bit strings that are used as the first and second encoding values 16, 18. So if the fingerprint value 14 is 0xE74FA33C, this can be divided into 0xE74F (used as the first encoding value 16) and 0xA33C (used as the second encoding value 18).

The encoder 4 then uses these encoding values 16, 18 to encode sensitive data 6 at step 106. The data 6 may be internal data within the device and/or it may be data received externally of the device, e.g. from a peripheral or some external device as appropriate. The encoder 4 then creates encoded data 20 in which the data 6 is encoded using the encoding values 16, 18. Assuming binary inputs of '0' or `1' in the data 6, the encoder creates encoded data 20 where the '0's in the incoming data 6 are encoded as the first encoding value (0xE74F in the above example) and the '1's are encoded as the second encoding value (0xA33C in the above example). The encoded data 20 may then be stored securely in the device memory 12, and/or may be output to some other portion of the device (not shown). The process then ends at step 108.

Even if an attacker were able to successfully extract the values of the encoding values 16, 18 from the device 2, these are only useful for that specific device 2. Another device of the same overall construction and function as the device 2 would not have the same fingerprint value produced by its own PUF, and so its encoding values would be completely different to those used by this device 2.

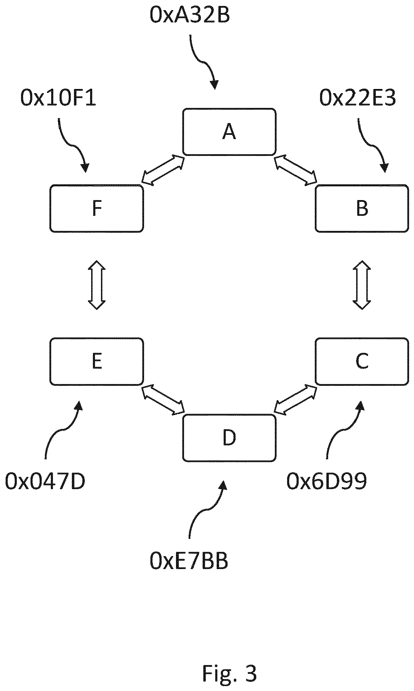

Fig. 3 shows a state diagram in which a variable may have one of six different states, labelled A-F. As can be seen in the diagram, each of these states is encoded using a different encoding value, where these values are derived from the PUF module 8 described previously. As such, the variable is, in this particular example, encoded such that:
- when the variable has the state 'A' it is encoded as 0xA32B;
- when the variable has the state 'B' it is encoded as 0x22E3;
- when the variable has the state 'C' it is encoded as 0x6D99;
- when the variable has the state 'D' it is encoded as 0xE7BB;
- when the variable has the state 'E' it is encoded as 0x047D; and
- when the variable has the state 'F' it is encoded as 0x10F1.

It will of course be appreciated that more or fewer states could be used, and a more complex transition between the various states may also be possible (for example where state 'C' could transition to state 'F'), however a simple cycle of six states is show for ease of reference. It will also be appreciated that the PUF module in a different device (but of the same design) would have six completely different encoding values.

It can be seen, therefore, that embodiments of the present invention provide an improved arrangement in which the non-trivial constants used as encoding values are set using a PUF within the device, thereby making these constants unique-per-device. While conventional approaches, known in the art *per se,* may make it difficult for an attacker to find a suitable method for altering an encoding value (e.g. to change a variable from one valid state to another valid state), the present invention advantageously makes it more difficult for the attacker to find the actual values to use (i.e. the valid non-trivial constants to which a value must be changed to remain valid). As the constants are unique-per-device, a successful attack on a device embodying the present invention does not yield any information that could be used to successfully attack another device of the same class.

Those skilled in the art will appreciate that the specific embodiments described herein are merely exemplary and that many variants within the scope of the invention are envisaged.

## Claims

1. A method of encoding a variable having one of a plurality of states using an integrated circuit (2) comprising a physical unclonable function module (8) able to generate (102) a fingerprint value deterministically dependent on one or more physical fabrication properties of the integrated circuit (2), the method comprising:
using the physical unclonable function module (8) to generate (102) said fingerprint value;
generating (104) a first encoding value using the fingerprint value;
generating (104) a second encoding value using the fingerprint value; and
encoding (106) said variable such that:
the variable is encoded using said first encoding value when the variable has a first state; and
the variable is encoded using said second encoding value when the variable has a second state.

2. The method as claimed in claim 1, further comprising:
generating at least one further encoding value using the fingerprint value;
wherein the variable is encoded using said further encoding value when the variable has a further state.

3. The method as claimed in claim 1 or 2, wherein the first encoding value is set to a first portion of the fingerprint value and the second encoding value is set to a second portion of the fingerprint value different to said first portion.

4. The method as claimed in any preceding claim, further comprising using the physical unclonable function module (8) to generate one or more cryptographic keys.

5. An integrated circuit (2) arranged to encode a variable having one of a plurality of states, wherein the device comprises:
a physical unclonable function module (8) able to generate (102) a fingerprint value deterministically dependent on one or more physical fabrication properties of the integrated circuit (2);
a generator (10) arranged to generate (104) first and second encoding values using the fingerprint value; and
an encoder (6) arranged to encode (106) said variable such that:
the variable is encoded using said first encoding value when the variable has a first state; and
the variable is encoded using said second encoding value when the variable has a second state.

6. The integrated circuit (2) as claimed in claim 5, further arranged such that:
the generator (10) is arranged to generate at least one further encoding value using the fingerprint value;
wherein the variable is encoded using said further encoding value when the variable has a further state.

7. The integrated circuit (2) as claimed in claim 5 or 6, wherein the generator (10) is arranged to set the first encoding value to a first portion of the fingerprint value and to set the second encoding value to a second portion of the fingerprint value different to said first portion.

8. The integrated circuit (2) as claimed in any of claims 5 to 7, wherein the physical unclonable function module (8) is arranged to generate one or more cryptographic keys.

9. A non-transitory computer-readable medium comprising instructions that, when executed by a processor, cause the processor to carry out a method as claimed in any of claims 1 to 4.

## Patentansprüche

1. Verfahren zum Encodieren einer Variable, die einen aus einer Vielzahl von Zuständen aufweist, unter Verwendung einer integrierten Schaltung (2), die ein physisch nicht kopierbares Funktionsmodul (8) umfasst, das dazu im Stande ist, einen Fingerabdruckwert zu erzeugen (102), der deterministisch von einer oder mehreren physischen Fertigungseigenschaften der integrierten Schaltung (2) abhängt, wobei das Verfahren Folgendes umfasst:
Verwenden des physisch nicht kopierbaren Funktionsmoduls (8), um den Fingerabdruckwert zu erzeugen (102);
Erzeugen (104) eines ersten Encodierungswerts unter Verwendung des Fingerabdruckwerts;
Erzeugen (104) eines zweiten Encodierungswerts unter Verwendung des Fingerabdruckwerts; und
Encodieren (106) der Variable derart, dass:
die Variable unter Verwendung des ersten Encodierungswerts encodiert wird, wenn die Variable einen ersten Zustand aufweist; und
die Variable unter Verwendung des zweiten Encodierungswerts encodiert wird, wenn die Variable einen zweiten Zustand aufweist.

2. Verfahren nach Anspruch 1, weiter umfassend:
Erzeugen zumindest eines weiteren Encodierungswerts unter Verwendung des Fingerabdruckwerts;
wobei die Variable unter Verwendung des weiteren Encodierungswerts encodiert wird, wenn die Variable einen weiteren Zustand aufweist.

3. Verfahren nach Anspruch 1 oder 2, wobei der erste Encodierungswert auf einen ersten Abschnitt des Fingerabdruckwerts eingestellt ist und der zweite Encodierungswert auf einen zweiten Abschnitt des Fingerabdruckwerts eingestellt ist, der sich von dem ersten Abschnitt unterscheidet.

4. Verfahren nach einem vorstehenden Anspruch, weiter umfassend Verwenden des physisch nicht kopierbaren Funktionsmoduls (8), um einen oder mehrere kryptografische Schlüssel zu erzeugen.

5. Integrierte Schaltung (2), die eingerichtet ist, um eine Variable zu encodieren, die einen aus einer Vielzahl von Zuständen aufweist, wobei die Vorrichtung Folgendes umfasst:
ein physisch nicht kopierbares Funktionsmodul (8), das im Stande ist, einen Fingerabdruckwert zu erzeugen (102), der deterministisch von einer oder mehreren physischen Fertigungseigenschaften der integrierten Schaltung (2) abhängt;
einen Erzeuger (10), der eingerichtet ist, erste und zweite Encodierungswerte unter Verwendung des Fingerabdruckwerts zu erzeugen (104); und
einen Encoder (6), der eingerichtet ist, die Variable derart zu encodieren (106), dass:
die Variable unter Verwendung des ersten Encodierungswerts encodiert wird, wenn die Variable einen ersten Zustand aufweist; und
die Variable unter Verwendung des zweiten Encodierungswerts encodiert wird, wenn die Variable einen zweiten Zustand aufweist.

6. Integrierte Schaltung (2) nach Anspruch 5, weiter derart eingerichtet, dass:
der Erzeuger (10) eingerichtet ist, zumindest einen weiteren Encodierungswert unter Verwendung des Fingerabdruckwerts zu erzeugen;
wobei die Variable unter Verwendung des weiteren Encodierungswerts encodiert wird, wenn die Variable einen weiteren Zustand aufweist.

7. Integrierte Schaltung (2) nach Anspruch 5 oder 6, wobei der Erzeuger (10) eingerichtet ist, den ersten Encodierungswert auf einen ersten Abschnitt des Fingerabdruckwerts einzustellen und den zweiten Encodierungswert auf einen zweiten Abschnitt des Fingerabdruckwerts einzustellen, der sich von dem ersten Abschnitt unterscheidet.

8. Integrierte Schaltung (2) nach einem der Ansprüche 5 bis 7, wobei das physisch nicht kopierbare Funktionsmodul (8) eingerichtet ist, einen oder mehrere kryptografische Schlüssel zu erzeugen.

9. Nichtflüchtiges computerlesbares Medium, das Anweisungen umfasst, die, wenn sie von einem Prozessor ausgeführt werden, den Prozessor dazu veranlassen, ein Verfahren nach einem der Ansprüche 1 bis 4 durchzuführen.

## Revendications

1. Procédé de codage d'une variable présentant un d'une pluralité d'états utilisant un circuit intégré (2) comprenant un module de fonction non clonable physique (8) apte à générer (102) une valeur d'empreinte dépendante de manière déterministe d'une ou de plusieurs propriétés de fabrication physiques du circuit intégré (2), le procédé comprenant les étapes consistant à :
utiliser le module de fonction non clonable physique (8) pour générer (102) ladite valeur d'empreinte ;
générer (104) une première valeur de codage en utilisant la valeur d'empreinte ;
générer (104) une seconde valeur de codage en utilisant la valeur d'empreinte ; et
coder (106) ladite variable de sorte que :
la variable soit codée en utilisant ladite première valeur de codage lorsque la variable présente un premier état ; et
la variable soit codée en utilisant ladite seconde valeur de codage lorsque la variable présente un second état.

2. Procédé selon la revendication 1, comprenant en outre l'étape consistant à :
générer au moins une autre valeur de codage en utilisant la valeur d'empreinte ;
dans lequel la variable est codée en utilisant ladite autre valeur de codage lorsque la variable présente un autre état.

3. Procédé selon la revendication 1 ou 2, dans lequel la première valeur de codage est réglée à une première portion de la valeur d'empreinte et la seconde valeur de codage est réglée à une seconde portion de la valeur d'empreinte différente de ladite première portion.

4. Procédé selon l'une quelconque des revendications précédentes, comprenant en outre l'utilisation du module de fonction non clonable physique (8) pour générer une ou plusieurs clés cryptographiques.

5. Circuit intégré (2) agencé pour coder une variable présentant un d'une pluralité d'états, dans lequel le dispositif comprend :
un module de fonction non clonable physique (8) apte à générer (102) une valeur d'empreinte dépendante de manière déterministe d'une ou de plusieurs propriétés de fabrication physique du circuit intégré (2) ;
un générateur (10) agencé pour générer (104) des première et seconde valeurs de codage en utilisant la valeur d'empreinte ; et
un codeur (6) agencé pour coder (106) ladite variable de sorte que :
la variable soit codée en utilisant ladite première valeur de codage lorsque la variable présente un premier état ; et
la variable soit codée en utilisant ladite seconde valeur de codage lorsque la variable présente un second état.

6. Circuit intégré (2) selon la revendication 5, agencé en outre de sorte que :
le générateur (10) soit agencé pour générer au moins une autre valeur de codage en utilisant la valeur d'empreinte ;
dans lequel la variable est codée en utilisant ladite autre valeur de codage lorsque la variable présente un autre état.

7. Circuit intégré (2) selon la revendication 5 ou 6, dans lequel le générateur (10) est agencé pour régler la première valeur de codage à une première portion de la valeur d'empreinte et pour régler la seconde valeur de codage à une seconde portion de la valeur d'empreinte différente de ladite première portion.

8. Circuit intégré (2) selon l'une quelconque des revendications 5 à 7, dans lequel le module de fonction non clonable physique (8) est agencé pour générer une ou plusieurs clés cryptographiques.

9. Support lisible par ordinateur non transitoire comprenant des instructions qui, lorsqu'elles sont exécutées par un processeur, amènent le processeur à réaliser un procédé selon l'une quelconque des revendications 1 à 4.
